# EUROPEAN PATENT APPLICATION

(11) **EP 4 636 956 A1**
(43) Date of publication of application: **22.10.2025**
(21) Application number: 25170171.0
(22) Date of filing: 11.04.2025
(51) Int. Cl.: H01R 4/62, H01R 43/16

(54) **CONNECTING MEMBER, CONNECTOR COMPRISING THE CONNECTING MEMBER, AND METHOD FOR PRODUCING THE CONNECTOR FOR CONNECTING ALUMINUM MAGNETIC WIRE TO ANOTHER CONDUCTOR**

(30) Priority: 17.04.2024 PL 44833024
(71) Applicant: Aweco Polska Appliance Sp. z o.o. sp. k, 43-100 Tychy (PL)
(72) Inventor: Kobielski, Maciej, 40-584 Katowice (PL); Kadzielawa, Damian, 44-105 Gliwice (PL)
(74) Representative: RavensPAT Patentanwälte Partnerschaft mbB

(57) **Abstract**

The subject of the present invention is a connecting member, a connector comprising the connecting member, and a method for producing the connector for connecting an aluminum magnetic wire to another conductor. Disclosed is a connecting member (1) for connecting an aluminum magnetic wire (2) to another conductor. The connecting member (1) is made of a composite metal sheet (5) comprising at least an aluminum layer (51) and at least a copper layer (52), wherein the connecting member (1) has two spaced-apart ends: a first end (6) is shaped in such a manner that the outer layer of the connecting member is constituted by the copper layer (52), and a second end (7) is shaped in such a manner that the aluminum layer (51) is adapted for connection to the aluminum magnetic wire (2). Also disclosed is a connector (9) constructed of the connecting members (1) according to the present invention which renders accessible copper contacts (91, 92) or copper contacts covered with another tin-containing metal or alloy. Disclosed as well is a method of producing the connector (9) made up of the connecting members (1) according to the present invention.

## Description

The subject of the present invention is a connecting member, a connector comprising the connecting member, and a method for producing the connector for connecting an aluminum magnetic wire to another conductor. The present invention belongs to the field of electrical engineering; in particular it relates to a connecting member, a connector comprising this connecting member, and a method for producing the connector for use in consumer devices comprising a circuit with an aluminum magnetic wire and adapted to be connected to circuits made up of a conductor other than aluminum.

A suitable conductive material of the connecting member, such as a connector terminal, a busbar, and the like, as used in electrical circuits, mainly of automobiles, consumer equipment, and the like, has an influence on the reliability of the electrical connection as well as the improvement of the adhesion of current-conducting surfaces when inserting a plug into a connector socket or when pulling the former out of the latter. The connecting member is a fundamental structural element of the connector which forms an interface for connecting together different electrical subassemblies.

Typically, in order to provide a suitable-quality connection, connecting members made of copper or brass are used. Copper may be additionally coated with tin (Sn) or a tin-containing alloy, with other metals, e.g., gold (Au), rarely being used. The coating with Sn is widely used because it is cheaper compared to the coating with Au and other surface-treatment agents. Most frequently, reflow coating with Sn and immersion coating with Sn are used.

Replacing the copper circuits with aluminum circuits in the electrical systems is one way to limit the production costs of the device. In solutions of this type, a problem is known of providing a suitable interface enabling the circuit made of copper to be connected to the circuit made of aluminum which will be resistant to the phenomenon of electrochemical corrosion. Commonly, suitable connecting members, connects, terminals, or washers are used for this purpose. Connects are known for connecting windings made up of the aluminum magnetic wire in electric motor stators. These connectors operate on the principle of cutting through the insulation layer and wedging into the softer material of the conduit wire; they are intended for conduits of specific thickness and cannot be used for an aluminum magnetic wire with a small diameter of below 0.2 mm or less.

European patent document EP3314625B1 is known from the prior art which discloses a plug-in device made up of a strip of an aluminum alloy. It is proposed therein that a strip of an aluminum alloy, covered by electroplating with a layer of an adhesion-promoting agent, is utilized to produce the device, wherein the layer applied by electroplating is a copper-tin alloy and it is applied directly onto the aluminum alloy. As disclosed therein, the layer of the adhesion-promoting agent has a thickness of up to 50 nm. A subsequent metal or alloy layer is overlaid on the layer of the adhesion-promoting agent. A drawback of that solution is that the plug-in device made up from the aluminum strip covered in the electroplating process with the copper alloy is sensitive to damage.

Typically, in fittings of the consumer devices, devices utilizing the phenomenon of magnetic induction, such as actuators, motors, coils, or transformers with the windings made up of the aluminum magnetic wire, are not used due to the difficulty of providing a suitable-quality connection to the remaining circuits of the device which are typically not made of aluminum. In industrial standards, copper or brass wiring and connecting members (connects), often additionally covered with a tin layer or a tin alloy layer, are used, and the contactors may be made as spring steel elements. The aluminum-copper connecting members known are difficult to use in a solution in which there arises a need to melt the aluminum layer in order to connect to the termination of the circuit made of the aluminum magnetic wire. The need to melt the aluminum layer may result from the necessity to remove the insulation layer of the magnetic wire which undergoes evaporation under the influence of high temperature.

The object of the present invention is to provide a connecting member which can be used to produce a connector connecting an aluminum circuit made up of a magnetic wire to a circuit made up of another conductor, such as copper, minimizing the risk of electrochemical corrosion developing, and thereby providing suitable electrical parameters of the connection and durability thereof. At the same time, the connecting member limits to a minimum the number of additional elements like special copper-aluminum connects, limiting the production costs. The connecting member provides a possibility of connection of a thin aluminum magnetic wire to the connecting member end by mutually melting the conductor of the wire and a compatible layer of the connecting member. The connecting member used in the structure of the connector provides a connector which at the same time provides the connection of the aluminum circuit to another conductor, and concomitantly does not require additional intermediate elements. Disclosed as well is a method for producing the connector.

The essence of the present invention is a connecting member for connecting an aluminum magnetic wire to another conductor, comprising at least an aluminum portion adapted for connection to the aluminum wire, and at least a copper portion adapted for connection to another conductor. The magnetic wire is a wire coated with a thin insulating layer and used in circuits utilizing the phenomenon of magnetic induction, such as actuators, motors, coils, or transformers. The connecting member is characterized in that the connecting member is made of a composite metal sheet comprising at least one aluminum layer and at least one copper layer, wherein the connecting member has two spaced-apart ends: a first end is shaped in such a manner that the outer layer of the connecting member is constituted by the copper layer, whereas a second end is shaped in such a manner that the aluminum layer is adapted for connection to the aluminum magnetic wire. In practical application, it is apparent that only one layer - the copper layer - is exposed to environmental conditions and can form an interface for circuits made of a conductor other than aluminum, such as copper.

It is preferable that the composite metal sheet of the connecting member is a metal sheet produced from the aluminum and the copper layer in a rolling process, wherein the thickness of the copper amounts to at least 20 µm, preferably between 25-100 µm. A thinner copper layer creates additional technological problems.

It is preferable that the second end of the connecting member, comprising the aluminum layer, is adapted to embed the aluminum wire, wherein the composite metal sheet comprises an aluminum alloy metallurgically compatible with the aluminum alloy of the magnetic wire, wherein the composite metal sheet comprises an aluminum layer which comprises at least 85 wt% of aluminum, preferably at least 90 wt% of aluminum.

It is preferable that the composite metal sheet of the connecting member is shaped by punching and bending. The layers of the composite metal sheet lie essentially in parallel planes, except for the areas of bendings or overbendings.

It is preferable that the copper on the first end of the connecting member, comprising the outer copper layer, is covered with an additional layer; preferably it is a layer comprising tin, preferably tin alone. With the copper layer being too thin, covering the copper with tin may cause the metals to at least partially intermix and a layer of bronze to be produced whose electrical properties at the interface with the aluminum are different than for the aluminum-copper contact zone, and because of this the connection may have non-uniform electrical parameters, which is unfavorable.

It is preferable that the composite metal sheet near the first end is bent such that the aluminum layers are directed towards each other, and the copper layer is directed outwardly from the connecting member, whereas near the second end, the composite metal sheet is additionally shaped such that an area is developed in which the aluminum layer forms a layer adapted for connection to the aluminum magnetic wire, preferably directed outwardly from the connecting member, by suitably bending the composite metal sheet or by exposing the aluminum layer in a section of the composite metal sheet. The first end is developed by a first bending of the composite metal sheet so that the aluminum layers are directed towards each other. The second end is developed by re-bending or trimming at least one side of the composite metal sheet so as to render the aluminum layer of the composite metal sheet accessible for connection to the magnetic wire.

A connector for devices comprising the aluminum magnetic wire, especially for
actuators with a coil with the aluminum magnetic wire, comprises the at least two connecting members according to the present invention. The connect is characterized in that the connecting members, which constitute the terminations of a circuit with the aluminum magnetic wire, comprise ends with an outer copper layer or one of copper covered with a tin-containing layer and form contacts of the connect, adapted to connect to an external circuit.

It is preferable that the ends of the connecting members, forming the connect, which comprise the aluminum layer, form a thermal melt connection to the magnetic wire.

It is preferable that the connect is permanently and tightly insulated from the surroundings by virtue of a material with low electrical conductivity which surrounds the connecting members, except for the ends of the connecting members, forming the contacts of the connect. It is preferable that the entire device is surrounded by a continuous insulating layer, except for the area of the contacts of the connect.

The method for producing the connect is characterized in that it comprises the following steps:
a) a step of forming the at least two connecting members from the composite metal sheet, each of which comprises the at least one aluminum layer and at least one copper layer, wherein the connecting member has two spaced-apart ends: a first end is shaped in such a manner that the outer layer of the connecting member is constituted by the copper layer, whereas a second end is shaped in such a manner that the aluminum layer is adapted for connection with the aluminum wire,
b) a step of permanently connecting the second end of each connecting member with the magnetic wire of aluminum,
c) a step of producing an insulation from the surroundings by virtue of a material with low electrical conductivity, preferably by embedding the first end and a part of the connecting member in the material with the low electrical conductivity which, after curing, constitutes a housing of the connect, wherein the portion of the connect forming the contacts of the connect remains unembedded.

It is preferable that the permanent connecting in step b) is performed simultaneously for all the connecting members or sequentially.

It is preferable that the permanent connecting in step b) comprises portions of the circuit made of aluminum being electrically connected by welding, or melting the aluminum material of the magnetic wire conduit and the aluminum layer of the connecting member.

An advantage of the present invention is the provision of a connecting member which enables a thermal connection to be made between the aluminum layer of the connecting member and the aluminum magnetic wire. Owing to this, the aluminum magnetic wire can be effectively utilized in the structure of the electrical fittings utilizing such a wire, and a suitable-quality and -durability connection can be provided to the remaining circuits constructed of a conductor of a different kind than aluminum. Typically, in order to provide reliability, copper or brass connects, often additionally covered with a tin or a tin-containing alloy layer, or with another metal, are used.

Another advantage of the present invention is the provision of a connecting member which minimizes the unfavorable phenomena related to the electrochemical corrosion of the aluminum-copper connection. The use of a rolled composite metal sheet also enables suitable stiffness and durability of the component to be provided, which component is the connect according to the present invention, comprising the connecting member according to the present invention. At the same time, the rolled layers are significantly more resistant to bending and other mechanical interaction than the layers produced by coating.

An embodiment of the present invention is shown in the accompanying drawings in which: Fig. 1 shows an axonometric view of an exemplary connecting member, Fig. 2 shows an axonometric view of the exemplary connecting member with a wound and thermally connected aluminum wire, Fig. 3 shows a cut-out view of the connecting member with indication of a bending line, Fig. 4 shows a connector with two exemplary connecting members forming the terminations of a circuit with an aluminum magnetic wire of an actuator, Fig. 5 shows an axonometric view of the exemplary connecting member according to a second embodiment, Fig. 6 shows an axonometric view of the exemplary connecting member according to the second embodiment with an embedded and thermally connected aluminum wire,

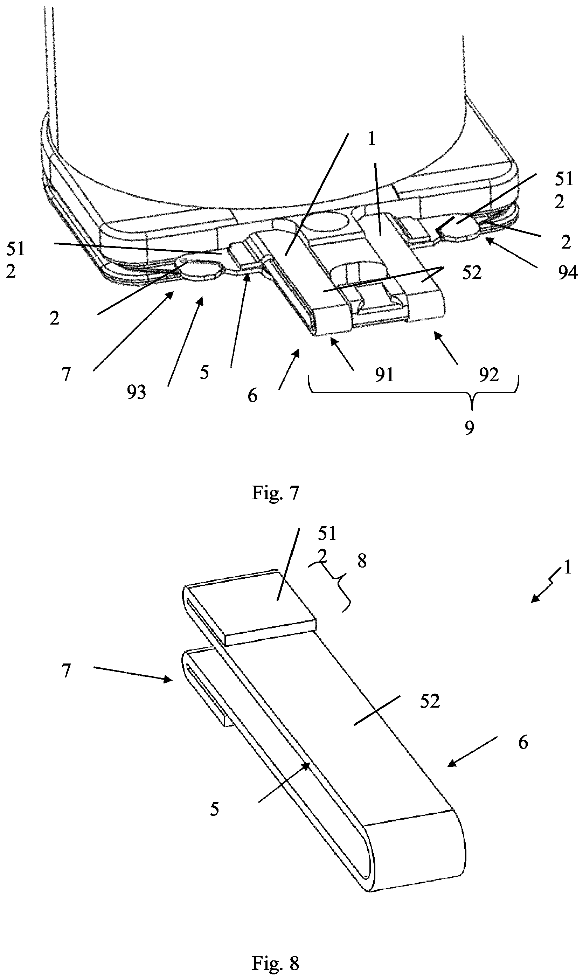

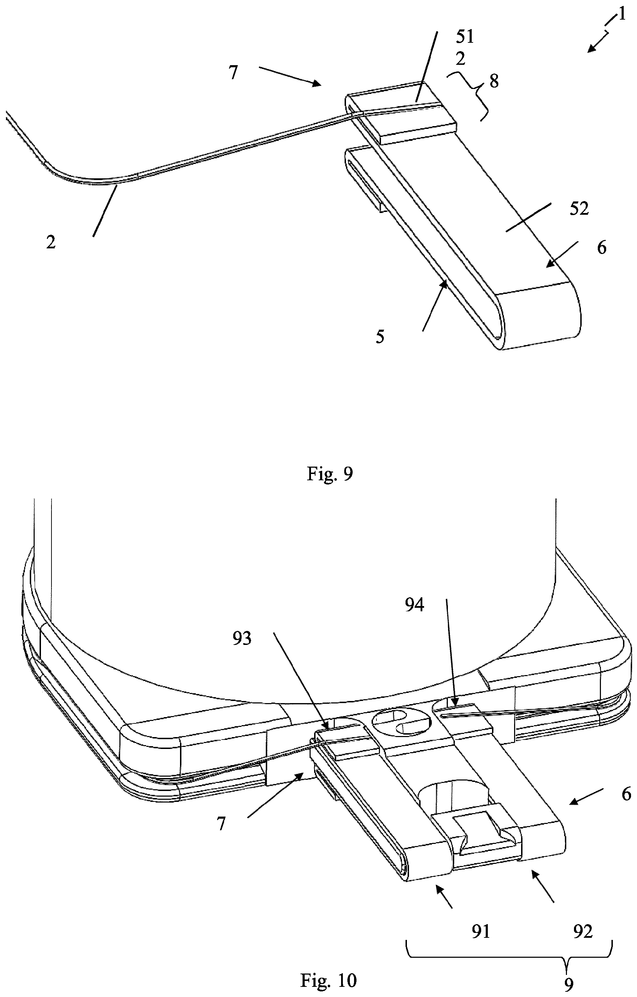

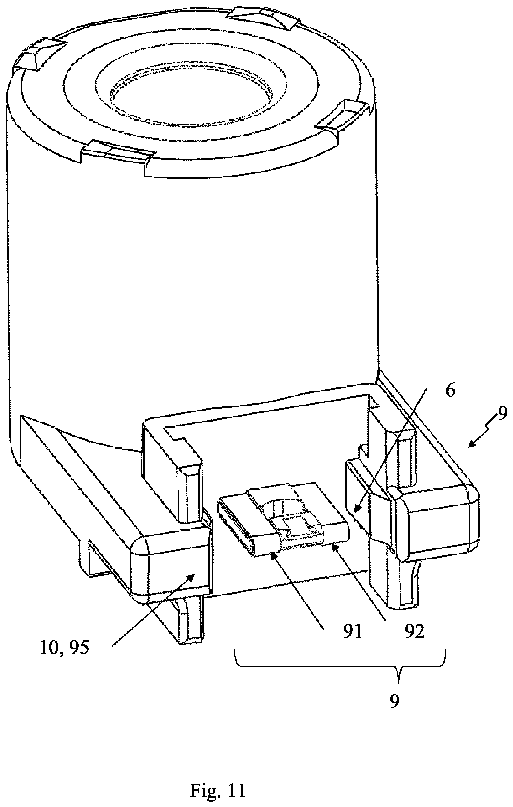

Fig. 7 shows the connector with two exemplary connecting members according to the second embodiment, forming the terminations of a circuit with an aluminum magnetic wire of an actuator, Fig. 8 shows an axonometric view of the exemplary connecting member according to a third embodiment, Fig. 9 shows an axonometric view of the exemplary connecting member according to the third embodiment, with a thermally connected aluminum wire, Fig. 10 shows the connector with two exemplary connecting members according to the third embodiment, forming the terminations of a circuit with an aluminum magnetic wire of an actuator, Fig. 11 shows an axonometric view of an exemplary actuator with the connector according to any of the embodiments, wherein the actuator and a portion of the connector are surrounded by an insulation molded into the housing.

The first embodiment of the present invention relates to a connecting member 1 which is tasked to connect a circuit made of aluminum to a copper circuit. The connecting member 1 is made from a composite metal sheet 5 comprising an aluminum layer 51 and a copper layer 52. Such a metal sheet is known under the term composite metal sheet, CCA (Copper-Clad-Aluminum) metal sheet, bi-metallic metal sheet, cupal-type metal sheet, or kupal metal sheet. Such a metal sheet is produced in a rolling process. Methods of cold rolling as well as hot rolling are known.

The composite metal sheet 5 has a standardized thickness of, by way of example, 0.25 mm, and the thickness of the copper layer 52 amounts to, by way of example, 0.05 mm.

The connecting member 1 for connecting an aluminum magnetic wire 2 comprises a aluminum layer thick enough for it to be possible to effectively melt this layer with the aluminum magnetic wire 2. Owing to this, in one technological step, an insulation with which the magnetic wire 2 is coated is removed and a durable connection is formed to the aluminum layer 51 of the connecting member 1. The second layer of the connecting member - the copper layer 52 - forms a contact surface for connection to another circuit utilizing standard copper connectors. The surface of the copper layer 52 in an aspect of the embodiment is covered with a tin alloy or tin. In yet another aspect of the same embodiment, the copper layer 52 is coated with an additional silver or gold layer for further improvement of the quality of the electrical contact of the connector 9.

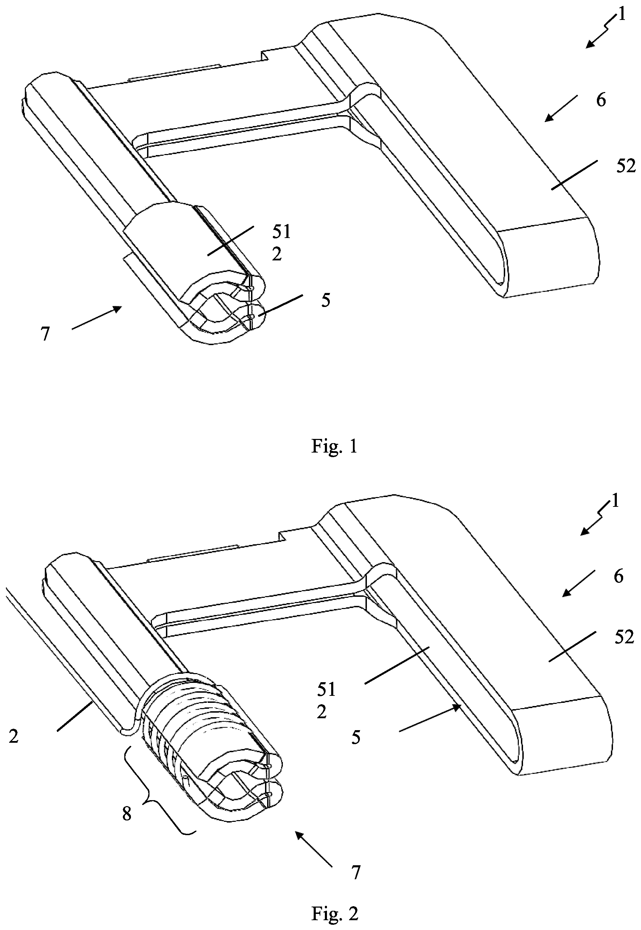

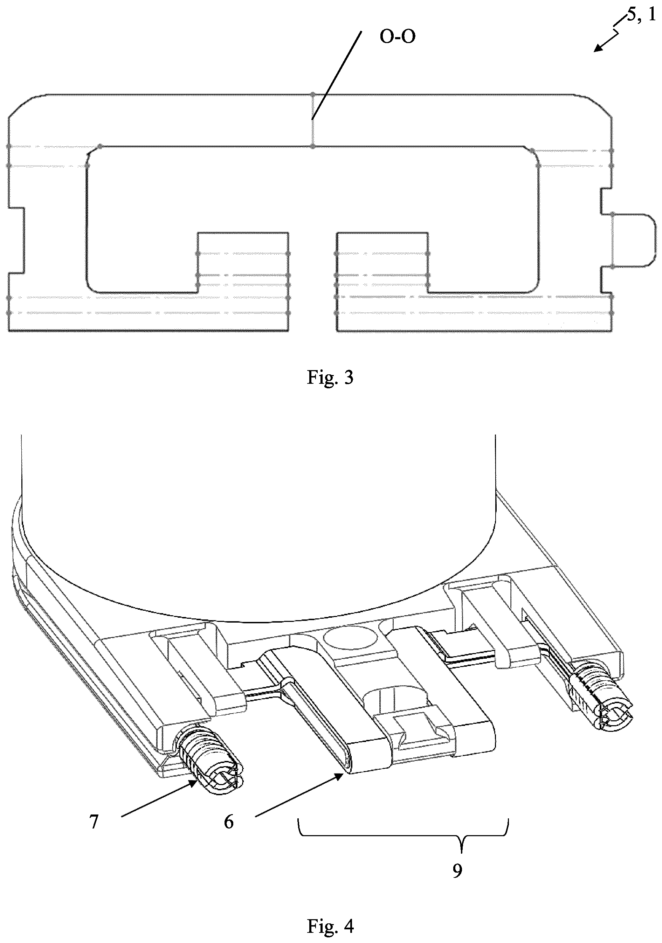

The connecting member 1 has two spaced-apart ends: a first end 6 is shaped in such a manner that the outer layer of the connecting member 1 is constituted by the copper layer 52, whereas a second end 7 is shaped in such a manner that the outer layer of the connecting member 1 is constituted by the aluminum layer 51. Such a topology allows an external peripheral contact surface of aluminum on one side to be obtained and an external
peripheral contact surface of copper on the other side to be obtained. An exemplary shape of the connecting member is shown in Figs. 1, 2, 3 and 4. The connecting member 1 is developed by punching from the composite metal sheet 5, and then by bending suitably. As shown in Fig. 3, the connecting member has a cut-out with approximately one axis of symmetry O-O (with a deviation being constituted by a groove on one edge and a tongue on the other) which at the same time constitutes a bending line, wherein the first end 6 is arranged on one arm, and the second end 7 on the other arm. The first end 6 is shaped in such a manner that the outer layer of the connecting member 1 is constituted by the copper layer 52, whereas the second end 7 is shaped in such a manner that the outer layer of the connecting member 1 is constituted by the aluminum layer 51. This has been obtained by a first bending at an angle close to 180 degrees, directing the aluminum layers 51 of the connecting member 1 towards each other and forming the first end 6 of the connecting member 1. Then, the same termination on the second end 7 of the connecting member 1 has been obtained by re-bending the composite metal sheet 5 around the second end 7 of the connecting member 1, forming a cylindrical-like termination with the aluminum layer 51 directed outwardly. According to this embodiment, the cylindrical termination constitutes a terminal around which the aluminum magnetic wire 2 is wound and subjected to welding in order to melt the aluminum and evaporate the insulation layer of the aluminum magnetic wire 2. Owing to this, the connecting member, once connected to the termination of the circuit made of aluminum, provides suitable electrical properties of the connection and, at the same time, suitable durability and resistance to electrochemical corrosion.

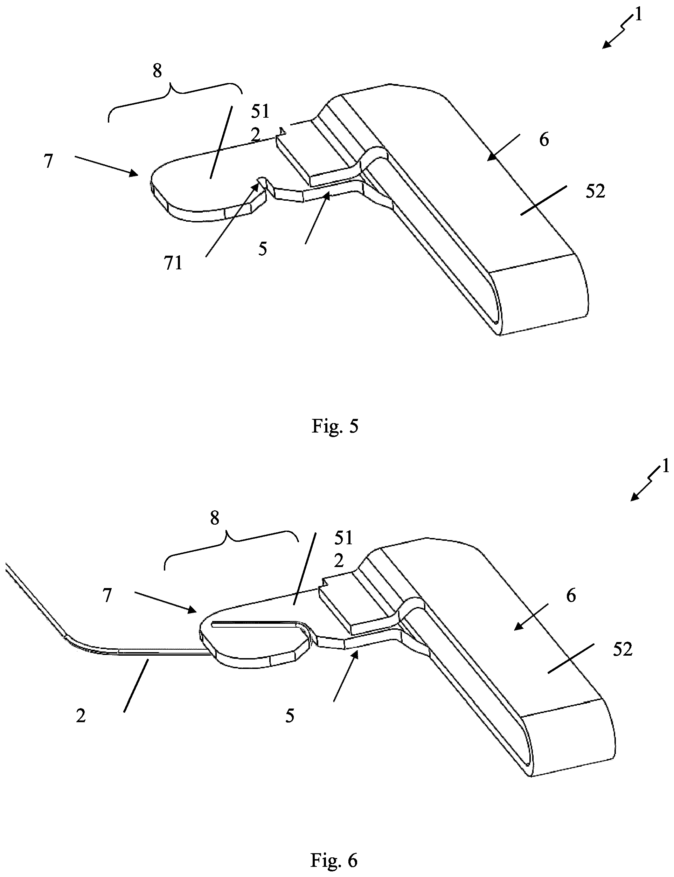

In the second embodiment (Figs. 5, 6 and 7), the connecting member 1 has been made in an L-like shape, wherein the bending encompasses only the first end 6 of the connecting member 1. The composite metal sheet 5 is bent at an angle close to 180 degrees, directing the aluminum layers 51 towards each other, only at the first end 6 of the connecting member 1. Conversely, the second end of the connecting member has been formed from a section of the composite metal sheet, which comprises the aluminum layer 51 not covered up by the bent section of the composite metal sheet 5, forming the second end of the connecting member 1. In this embodiment, the aluminum magnetic wire 2 is welded to the exposed aluminum layer 51 of the composite metal sheet 5 on the second end 7 of the connecting member 1. By way of example, as shown in Fig. 5 and Fig. 6, the second end 7 of the connecting member 1 comprises a cut-out 71 for attaching the aluminum magnetic wire 2 before the welding is done.

In the third embodiment (Figs. 8, 9 and 10), the connecting member 1 has been made in an elongated shape. The composite metal sheet 5 has been bent at an angle close to 180 degrees, directing the aluminum layers 51 towards each other, in the area of the first end 6 of the connecting member 1. Conversely, the second end 7 of the connecting member 1 has been formed by re-bending both the
ends of the composite metal sheet 5 at an angle of 180 degrees, directing the copper layers 52 towards each other, forming the second end 7 of the connecting member 1. The re-bent sections are shorter than the length of the connecting member 1, so that the aluminum layer 51 of the connecting member 1 is accessible only in the area 8 of the second end 7 of the connecting member 1, enabling the formation of a thermal connection to the aluminum magnetic wire 2.

In the embodiments shown, the second end 7 of the connecting member 1, comprising the outer aluminum layer 51, is adapted to embed the aluminum magnetic wire 2. By way of example, the composite metal sheet 5 comprises an aluminum alloy metallurgically compatible with the aluminum alloy of the aluminum magnetic wire 2. In an aspect of the embodiments, it is sufficient if the aluminum layer 51 is accessible for connecting to the aluminum magnetic wire 2 only during the process of producing the connector 9. By way of example, taking into consideration the third embodiment in an aspect thereof, the second bending of the composite metal sheet 5 may not occur, and there may occur merely the introducing of the aluminum magnetic wire 2 between the aluminum layers 51 and the subjecting of them to welding by pressing the ends of the once-bent composite metal sheet - with the aluminum layers 51 directed towards each other - and the subjecting of them to thermal treatment (through the copper layers 52) in order to melt the aluminum layers 51 with the aluminum magnetic wire 2 and each other. Similarly, in an aspect of the second embodiment, a connection of the aluminum magnetic wire 2 may be made to the exposed aluminum layer 51 of the connecting member 1, and then the composite metal sheet 5 of the second end 7 may be bent such that the aluminum layers 51 are directed towards each other. At this moment, the connection to the aluminum magnetic wire 2 is located inside the connecting member 1, and the exterior of the connecting member 1 is formed only by the copper layer 52.

In another embodiment, the connector 9 (also called a connect), as disclosed in Figs. 4, 7, 10 and 11, for devices comprising the aluminum magnetic wire 2, especially for actuators with a coil with the aluminum magnetic wire 2, comprises two connecting members 1 according to any one of the previous embodiments. The connector 9 comprises two connecting members 1 which constitute the terminations of a circuit with the aluminum magnetic wire 2. The connecting members 1 comprise ends with the outer copper layer 52 which forms contacts 91, 92 of the connector, adapted to connect to external circuits. In an aspect of the embodiment, the copper surface of the contacts 91, 92 is additionally covered with a tin-containing layer.

The ends of the connecting members 1, forming the connector 9, which comprise the aluminum layer 51 and form the thermal melt connection to the aluminum magnetic wire 2, are protected against the impact of external conditions, in particular against the access of moisture, by an insulation 10. The connector is permanently and tightly insulated from the surroundings by virtue of a material with low electrical conductivity and low flammability which surrounds the connecting members 1, except for the ends 6 of the connecting members, forming the contacts 91, 92 of the connector. Usually, in practical implementations, the entire device, together with the connector, is surrounded by a continuous insulating layer 10, except for the area of the contacts 91, 92 of the connector 9. By way of example, the insulation layer is made of polyamides - PA6 or PA66, or a mixture thereof; various other solutions with low flammability, including also chemically curable resins, are also known from the prior art.

The embodiment includes an example of carrying out the method for producing
the connector 9 and comprises the following steps:
a) From the composite metal sheet 5, two connecting members 1 according to one of the previous embodiments are formed each of which comprises the aluminum layer 51 and the copper layer 52, wherein the connecting member 1 has two spaced-apart ends: the first end 6 is shaped in such a manner that the outer layer of the connecting member 1 is constituted by the copper layer 52, whereas the second end 7 is shaped in such a manner that the outer layer of the connecting member 1 is constituted by the aluminum layer 51. The forming consists in making the shape of the connecting member 1 - by way of example, it is a rectangular shape (for the third embodiment) or a shape shown in Fig. 3 (for the first embodiment) - being punched from the composite metal sheet 5 according to a template, then the punched piece is bent at an angle of 180 degrees at half its length (in this embodiment, along the symmetry axis O-O) so that the aluminum layers 51 are directed towards each other. In this manner, the first end 6 of the connecting member 1 is developed. Two ends of the composite metal sheet 5 are obtained which are directed towards one side, then a short section (shorter than half the length of the connecting member) of each of the two ends of the composite metal sheet 5 is re-bent at an angle of 180 degrees so as to direct the copper layers 52 towards each other and form the second end 7 of the connecting member 1.
b) The permanent connecting of the second end 7 of each connecting member 1 to the aluminum magnetic wire 2 with the aluminum of the aluminum layer 51 consists in, by way of example, welding and melting the aluminum material of the aluminum conduit of the magnetic wire 2 and the aluminum layer 51 of the connecting member 1. It is not within the scope of the present invention to produce a device comprising the aluminum magnetic wire 2, but the process of producing the connector 9 may be combined therewith; in such a case, after
   connecting the first connecting member 1, there may occur a step of winding a coil winding made up of the aluminum magnetic wire 2, and then a permanent connecting of the second end 7 of the second connecting member 1 to the second end of the aluminum magnetic wire 2.
c) The insulation 10 insulating from the surroundings by virtue of the material with low electrical conductivity, by way of example PA66, is produced by embedding the second end 7 and a portion of the connecting member 1 in the material with low electrical conductivity which, after curing, constitutes a housing of the connector 9, wherein the portion of the connector 9, forming the contacts 91 and 92, remains unembedded. In an aspect of this example, it should be indicated that producing the insulation may comprise covering the entire device comprising the aluminum magnetic wire 2, and the portion of the connector 9, except for the contacts 91 and 92, with a continuous insulation, which provides optimal insulation from environmental conditions.

## Claims

1. A connecting member (1) for connecting an aluminum magnetic wire (2) to another conductor, comprising at least an aluminum layer (51) and at least a copper layer (52), **characterized in that** the connecting member (1) is made of a composite metal sheet (5) comprising at least the aluminum layer (51) and at least the copper layer (52), wherein the connecting member (1) has two spaced-apart ends: a first end (6) is shaped in such a manner that the outer layer of the connecting member is constituted by the copper layer (52), and a second end (7) is shaped in such a manner that the aluminum layer (51) is adapted for connection to the aluminum magnetic wire (2).

2. The connecting member according to claim 1, **characterized in that** the composite metal sheet (5) is a metal sheet produced from the aluminum layer (51) and the copper layer (52) in a rolling process, wherein the thickness of the copper amounts to at least 20 µm, preferably between 25-100 µm.

3. The connecting member according to claim 1 or 2, **characterized in that** the second end (7) comprising the aluminum layer (51) is adapted to embed the aluminum magnetic wire (2), wherein the composite metal sheet comprises an aluminum alloy metallurgically compatible with the aluminum alloy of the aluminum magnetic wire (2), wherein the aluminum layer of the composite metal sheet (5) comprises an aluminum layer which comprises at least 85 wt% of aluminum, preferably at least 90 wt% of aluminum.

4. The connecting member according to claims 1-3, **characterized in that** the composite metal sheet (5) is shaped by punching and bending.

5. The connecting member according to claims 1-4, **characterized in that** the copper on the first end (6), comprising the outer copper layer (52), is covered with an additional metal layer; preferably it is a layer comprising tin, preferably tin alone.

6. The connecting member according to claims 1-5, **characterized in that** the composite metal sheet (5) near the first end (6) is bent such that the aluminum layers (51) are directed towards each other, and the copper layer (52) is directed outwardly from the outer surface of the connecting member (1), whereas near the second end (7), the composite metal sheet (5) is additionally shaped such that an area (8) is developed in which the aluminum layer (51) forms a layer adapted for connection to the aluminum magnetic wire (2), preferably directed outwardly from the connecting member (1), by suitably bending the composite metal sheet (5) or by exposing the aluminum layer (51) in a fragment of the composite metal sheet (5).

7. A connector (9) for devices comprising the aluminum magnetic wire (2), especially for actuators with a coil wound with the enameled aluminum magnetic wire (2), comprising the at least one connecting member, **characterized in that** it comprises the connecting members (1) as set out in claims 1-7, which are adapted for connection to the aluminum magnetic wire (2), and comprise ends with an outer copper layer or one of copper covered with another metal, and these ends form contacts (91, 92) of the connector (9) which are adapted to connecting to an external circuit.

8. The connector (9) according to claim 7, **characterized in that** the ends (93, 94) of the connecting members (1), which comprise the aluminum layer (51), are adapted for thermal connection to the aluminum magnetic wire (2).

9. The connector (9) according to claim 8, **characterized in that** the connector (9) is insulated from the surroundings by means of an insulation (10) of a material with low electrical conductivity, which surrounds the connecting members (1), except for the ends of the connecting members (1), forming the contacts (91, 92) of the connector.

10. A method for producing the connector (9) for a circuit made of aluminum, in particular the aluminum magnetic wire (2), **characterized in that** it comprises the following steps:
a. forming the at least one connecting member (1) from the composite metal sheet (5), which comprises at least the aluminum layer (51) and at least the copper layer (52), wherein the connecting member (1) has two spaced-apart ends: the first end (6) is shaped in such a manner that the outer layer of the connecting member (1) is constituted by the copper layer (52), and the second end (7) is shaped in such a manner that the aluminum layer (51) of the connecting member (1) is adapted for connection to the aluminum magnetic wire (2),
b. permanently connecting the second end (7) of each connecting member (1) to the corresponding end of the aluminum magnetic wire (2), with the aluminum layer (51) of the composite metal sheet (5) of each connecting member (1),
c. providing the insulation (10) for insulating from the surroundings of the material with low electrical conductivity, preferably by surrounding the second end (7) and a portion of the connecting member (1) with the material with low electrical conductivity which preferably concomitantly constitutes a housing (95) of the connector (9), wherein the portion of the connector, forming the contacts (91, 92), remains exposed.

11. The method for producing the connector according to claim 10, **characterized in that** the permanent connecting in step b. is performed simultaneously for all the connecting members or sequentially.

12. The method for producing the connector according to claim 10, **characterized in that** the permanent connecting in step b. comprises a portion of the circuit made of aluminum being electrically connected by welding, and intermixing of the aluminum material of the conduit made up of the aluminum magnetic wire (2) and the aluminum layer (51) of the connecting member (1), wherein the welding proceeds at a temperature at which there occurs evaporation of the insulating layer of the aluminum magnetic wire (2).
